# EUROPEAN PATENT SPECIFICATION

(11) **EP 3 068 152 B1**
(45) Date of publication and mention of the grant of the patent: **05.08.2020**
(21) Application number: 14868738.7
(22) Date of filing: 12.12.2014
(51) Int. Cl.: H04W 4/00, H04W 8/02, H04W 8/20, H04W 8/24, H04W 12/06, H04W 60/00, H04W 12/04, H04W 4/50, H04W 4/60, H04W 12/00, H04W 8/18

(54) **METHOD AND TERMINAL FOR DATA SERVICE TRANSMISSION**
VERFAHREN UND ENDGERÄT ZUR ÜBERTRAGUNG VON DATENDIENSTEN
PROCÉDÉ ET TERMINAL POUR UNE TRANSMISSION DE SERVICE DE DONNÉES

(30) Priority: 13.12.2013 CN 201310687424
(43) Date of publication of application: 14.09.2016
(73) Proprietor: Huawei Device Co., Ltd., Dongguan, Guangdong 523808 (CN)
(72) Inventor: LIAN, Hai, Shenzhen Guangdong 518129 (CN)
(74) Representative: Maiwald Patent- und Rechtsanwaltsgesellschaft mbH
(86) International application number: PCT/CN2014/093645
(87) International publication number: WO 2015/085943

(56) References cited:
- EP-A1- 2 897 394
- CN-A- 1 518 372
- CN-A- 101 222 711
- CN-A- 101 222 723
- CN-A- 103 686 669
- US-A1- 2004 023 689
- US-A1- 2013 023 235
- NN: "The Trusted Execution Environment, White Paper", INTERNET CITATION, 28 February 2011 (2011-02-28), pages 1-26, XP002716538, Retrieved from the Internet: URL:http://www.globalplatform.org/document s/GlobalPlatform_TEE_White_Paper_Feb2011.p df [retrieved on 2013-11-11]

## Description

This application claims priority to Chinese Patent Application No. 201310687424.5, filed with the Chinese Patent Office on December 13, 2013 and entitled "METHOD FOR DATA SERVICE TRANSMISSION AND TERMINAL".

### TECHNICAL FIELD

The present invention relates to the field of communications technologies, and in particular, to a method for data service transmission and a terminal.

### BACKGROUND

With development of smartphones and development of wireless network technologies, a terminal user has a strong demand for ubiquitous Internet access. In a traditional data roaming solution, data service transmission is performed mainly by accessing a data network through a visited-region or a home-region gateway general packet radio service support node (GGSN).

A user in an international roaming state uses a network of a foreign operator, and an international roaming tariff standard is determined based on an agreement between operators of two countries or regions. In most countries or regions, tariffs for an international roaming data service are higher than national tariffs.

Faced with the high tariffs for the roaming data service, internationally roaming terminal users have to cautiously use the international roaming service, and large-amount bills are very likely to be generated. Further, as smart terminals nowadays are often active in a data service, there is no better approach to effectively control and reduce usage fees for the user except disabling the data roaming service. In addition, the terminal user may use a network of a foreign operator by means of card replacement. However, if this means is used, the terminal user needs to buy a phone card of a roaming region or go to a business hall of an operator in a roaming region to apply for a related service, and also needs to replace a card. Such operations are inconvenient.

US2013/023235A1 describes that devices systems, and methods are disclosed which relate to provisioning a universal integrated circuit card (UICC) with multiple services. The UICC enables a wireless communication device to communicate through multiple carriers by using a unique virtual subscriber identity module (SIM) to register with each carrier. The unique virtual SIM is one of a plurality of virtual SIMs stored on and managed by the UICC. A carrier network includes a server for provisioning a new virtual SIM on a UICC over-the-air (OTA) when a new customer requests a service such as voice, data, or other type of service. These UICCs may also include logic to automatically select the best carrier for a voice call depending on the user settings

### SUMMARY

An objective of the present invention is to provide a method and an apparatus for data service transmission, which can resolve a problem of high costs incurred when a roaming terminal user uses a data service without replacing a card, is fast and convenient, and does not require card replacement.

In a first aspect, there is provided a method for data service transmission as defined in appended claim 1. In a second aspect, there is provided a method for data service transmission of a roaming terminal as defined in appended claim 5. In a third aspect, there is provided a terminal as defined in appended claim 6.

To achieve the foregoing objective, a first aspect of the present invention provides a method for data service transmission, where the method includes:
when arriving in a roaming region, receiving, by a terminal, a first message sent by a network operator in the roaming region, where the first message carries identification information of a virtual subscriber identity module SIM card of the network operator in the roaming region;
after succeeding in network authentication of the network operator in the roaming region, downloading, by the terminal, virtual SIM card information according to the identification information of the virtual SIM card in the first message; and
using, by the terminal by utilizing the virtual SIM card, a service provided by the network operator in the roaming region to perform service transmission.

With reference to the first aspect, in a first possible implementation manner of the first aspect, the first message is an over-the-air OTA message.

With reference to the first aspect or the first possible implementation manner of the first aspect, in a second possible implementation manner of the first aspect, the succeeding in network authentication of the network operator in the roaming region specifically includes:
acquiring, by the terminal, a service number and a service password of the network operator in the roaming region; and
when the terminal arrives in the roaming region, initiating, by the terminal, a call to the service number, and obtaining authentication information of the virtual SIM card by utilizing the service password, so as to succeed in the network authentication of the network operator in the roaming region.

With reference to the first aspect or the first possible implementation manner of the first aspect, in a third possible implementation manner of the first aspect, the first message further carries service option information and a payment mode for the virtual SIM card that are provided by the network operator in the roaming region to the terminal; and
the succeeding in network authentication of the network operator in the roaming region specifically includes:
selecting, by the terminal, service option information for the virtual SIM card according to the first message, and acquiring authentication information of the virtual SIM card by using the payment mode, so as to succeed in the network authentication of the network operator in the roaming region.

With reference to the first aspect, after the downloading virtual SIM card information according to the identification information of the virtual SIM card in the first message, the method further includes:
storing, by the terminal, the virtual SIM card information separately according to a security level of the virtual SIM information: storing an authentication key and an authentication algorithm in the virtual SIM information in a secure operating system, and storing the remaining of the virtual SIM information in an encrypting file system EFS.

With reference to the first aspect, in a fifth possible implementation manner of the first aspect, after the storing, by the terminal, the virtual SIM card information separately according to a security level of the virtual SIM information, the method further includes:
if the terminal is in a manual selection mode, receiving, by the terminal, conventional SIM card information or the virtual SIM card information, selected by a user, and performing configuration according to the conventional SIM card information or the virtual SIM card information selected by the user; or
if the terminal is configured to be in an automatic selection mode, automatically configuring, by the terminal, a conventional SIM card or the virtual SIM card according to network access information.

According to a second aspect, the present invention further provides a method for data service transmission, where the method includes:
sending, by a server of a network operator in a roaming region, a first message to a roaming terminal that enters the roaming region, where the first message carries identification information of a virtual subscriber identity module SIM card of the network operator in the roaming region;
receiving, by the server, a request, returned by the roaming terminal, for acquiring local virtual SIM card authentication information of the roaming region, determining whether to provide the virtual SIM card authentication information to the roaming terminal, and if yes, sending the virtual SIM card information to the roaming terminal when a request of the roaming terminal for downloading virtual SIM card information is received; and
storing, by the terminal, the virtual SIM card information separately according to a security level of the virtual SIM information: storing an authentication key and an authentication algorithm in the virtual SIM information in a secure operating system, and storing the remaining of the virtual SIM information in an encrypting file system EFS.

With reference to the second aspect, in a first possible implementation manner of the second aspect, the first message is an over-the-air OTA message.

With reference to the second aspect or the first possible implementation manner of the second aspect, in a second possible implementation manner of the second aspect, before the network operator in the roaming region sends the first message to the roaming terminal that enters the roaming region, the method further includes:
receiving a service call request initiated by the roaming terminal, where the service call request carries a service number and a service password of the network operator in the roaming region; and
the determining whether to provide the virtual SIM card authentication information to the roaming terminal specifically includes:
   determining whether the service password is valid, and if yes, determining to provide the virtual SIM card authentication information to the roaming terminal.

With reference to the second aspect or the first possible implementation manner of the second aspect, in a third possible implementation manner of the second aspect, the first message further carries service option information and a payment mode for the virtual SIM card that are provided by the network operator in the roaming region to the roaming terminal;
the method further includes:
receiving information about the virtual SIM card and a payment mode that are selected by the roaming terminal; and
the determining whether to provide the virtual SIM card authentication information to the roaming terminal specifically includes:
   determining whether the virtual SIM card and the payment mode that are selected by the roaming terminal are valid, and if yes, determining to provide the virtual SIM card authentication information to the roaming terminal.

According to a third aspect, the present invention further provides a terminal, where the terminal includes:
a receiving unit, configured to: when the terminal arrives in a roaming region, receive a first message sent by a network operator in the roaming region, where the first message carries identification information of a virtual subscriber identity module SIM card of the network operator in the roaming region; and
a processing unit, configured to: succeed in authentication of the network operator in the roaming region, download virtual SIM card information according to the identification information of the virtual SIM card in the first message received by the receiving unit, and use, by utilizing the virtual SIM card, a service provided by the network operator in the roaming region to perform service transmission.

With reference to the third aspect, in a first possible implementation manner of the third aspect, the first message is an over-the-air OTA message.

With reference to the third aspect or the first possible implementation manner of the third aspect, in a second possible implementation manner of the third aspect, the terminal further includes:
an acquiring unit, configured to acquire a service number and a service password of the network operator in the roaming region; and
when the terminal arrives in the roaming region, the processing unit is specifically configured to: initiate a call to the service number acquired by the acquiring unit, and obtain authentication information of the virtual SIM card by utilizing the service password, so as to succeed in the network authentication of the network operator in the roaming region.

With reference to the third aspect or the first possible implementation manner of the third aspect, in a third possible implementation manner of the third aspect, the first message further carries service option information and a payment mode for the virtual SIM card that are provided by the network operator in the roaming region to the terminal; and
the processing unit is configured to acquire authentication information of the virtual SIM card, which specifically includes being configured to: select service option information for the virtual SIM card according to the first message, and acquire authentication information of the virtual SIM card by using the payment mode, so as to succeed in the network authentication of the network operator in the roaming region.

With reference to the third aspect, the terminal further includes:
a storage unit, configured to store the virtual SIM card information separately according to a security level of the virtual SIM information: storing an authentication key and an authentication algorithm in the virtual SIM information in a secure operating system, and storing the remaining of the virtual SIM information in an encrypting file system EFS.

With reference to the third aspect, in a sixth possible implementation manner of the third aspect, after the storage unit stores the virtual SIM card information separately according to the security level of the virtual SIM information, if the terminal is in a manual selection mode, the receiving unit is further configured to receive conventional SIM card information or the virtual SIM card information, selected by a user, and the processing unit is further configured to perform configuration according to the conventional SIM card information or the virtual SIM card information selected by the user; or
if the terminal is configured to be in an automatic selection mode, the processing unit automatically configures a conventional SIM card or the virtual SIM card according to network access information.

According to a fourth aspect, the present invention further provides a server, belonging to a network operator in a roaming region, where the server includes:
a sending unit, configured to send a first message to a roaming terminal that enters the roaming region, where the first message carries identification information of a virtual subscriber identity module SIM card of the network operator in the roaming region;
a receiving unit, configured to receive a request, returned by the roaming terminal, for acquiring local virtual SIM card authentication information of the roaming region;
a processing unit, configured to: determine whether to provide the virtual SIM card authentication information to the roaming terminal, and if yes, send the virtual SIM card information to the roaming terminal by using the sending unit when the receiving unit receives a request of the roaming terminal for downloading virtual SIM card information; and
wherein the virtual SIM card authentication information is configured to enable storage in a storage unit of the roaming terminal of the virtual SIM card information separately according to a security level of the virtual SIM information: storing an authentication key and an authentication algorithm in the virtual SIM information in a secure operating system, and storing the remaining of the virtual SIM information in an encrypting file system EFS.

With reference to the fourth aspect, in a first possible implementation manner of the fourth aspect, the first message is an over-the-air OTA message.

With reference to the fourth aspect or the first possible implementation manner of the fourth aspect, in a second possible implementation manner of the fourth aspect, the receiving unit is further configured to: before the sending unit sends the first message to the roaming terminal that enters the roaming region, receive a service call request initiated by the roaming terminal, where the service call request carries a service number and a service password of the network operator in the roaming region; and
the processing unit determines whether the service password received by the receiving unit is valid, and if yes, determines to provide the virtual SIM card authentication information to the roaming terminal.

With reference to the fourth aspect or the first possible implementation manner of the fourth aspect, in a third possible implementation manner of the fourth aspect, the first message sent by the sending unit further carries service option information and a payment mode for the virtual SIM card that are provided by the network operator in the roaming region to the roaming terminal;
the receiving unit receives information about the virtual SIM card and a payment mode that are selected by the roaming terminal; and
the processing unit determines whether the virtual SIM card and the payment mode that are selected by the roaming terminal and received by the receiving unit are valid, and if yes, determines to provide the virtual SIM card authentication information to the roaming terminal.

According to the method for data service transmission and the terminal provided in the present invention, a virtual SIM card is configured, so that a terminal user can, when arriving in a roaming region, use a localization service provided by a network operator in the roaming region to perform service transmission, which can conveniently and quickly resolve the problem of high costs incurred when a roaming terminal user uses a data service, and does not require card replacement.

### BRIEF DESCRIPTION OF DRAWINGS

FIG. 1 is a flowchart of a method for data service transmission according to Embodiment 1 of the present invention;
FIG. 2 is a flowchart of another method for data service transmission according to Embodiment 1 of the present invention;
FIG. 3 is a schematic diagram of a terminal according to Embodiment 2 of the present invention;
FIG. 4 is a schematic diagram of a server according to Embodiment 2 of the present invention;
FIG. 5 is a schematic diagram of composition of a terminal according to Embodiment 3 of the present invention; and
FIG. 6 is a schematic diagram of composition of a server according to Embodiment 3 of the present invention.

### DESCRIPTION OF EMBODIMENTS

The following further describes the technical solutions of the present invention in detail with reference to accompanying drawings and embodiments.

A method for data service transmission provided in the embodiments of the present invention is particularly suitable for a terminal user having a roaming need and a network operator in a roaming region, which provides a convenient and fast method for data service transmission for a roaming terminal and may not require card replacement.

Tariffs for an international roaming data service are usually relatively high. For example, a data service tariff of the operator China Unicorn in international zone 1 (the United States, among others) is RMB 0.01/KB (generally, a data service tariff of China Unicorn in Mainland China is RMB 0.0003/KB), a data service tariff in international zone 7 (Portugal, among others) is RMB 0.5/KB, and tariffs for roaming data services in Hong Kong, Macao, and Taiwan are up to RMB 0.005/KB to RMB 0.04/KB. These tariffs are all higher than local tariffs in the roaming regions. When roaming internationally, terminal users are usually restrained from using a data service freely because of the high tariffs, and have to cautiously use the international roaming service. It is learned that only 10% European mobile users use Internet services when they are roaming, and most of the users think that costs for using the roaming mobile Internet are too high (100 times higher than costs of local traffic).

For an operator, a consequence of cautious use of the international roaming data service by users is that the operator profits a little from roaming users. In addition, in a conventional data roaming solution, data service transmission is performed mainly by accessing a data network through a visited-region or a home-region gateway general packet radio service support node. In either case, two operators have to be involved in complex tariff settlement.

The method and the apparatus for data service transmission provided in the embodiments of the present invention can resolve a problem of high costs incurred when a roaming terminal user uses a data service without replacing a card.

### Embodiment 1

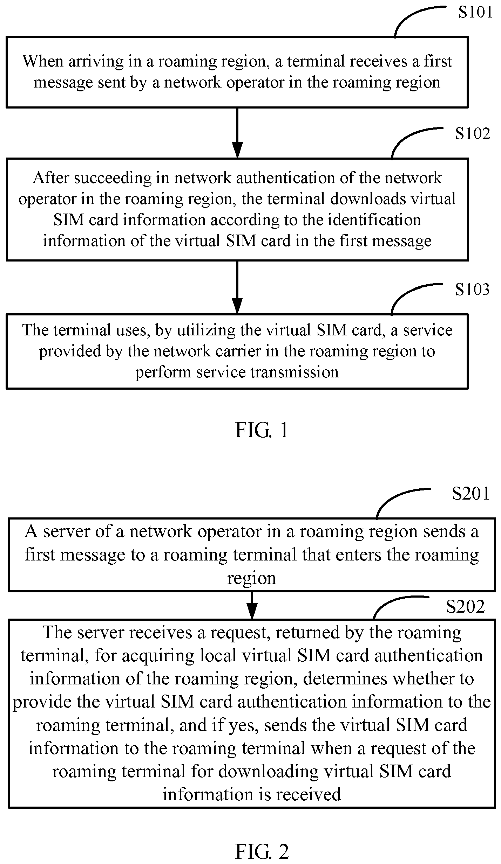

FIG. 1 is a flowchart of a method for data service transmission according to this embodiment. As shown in FIG. 1, the method for data service transmission of the present invention includes:

S101: When arriving in a roaming region, a terminal receives a first message sent by a network operator in the roaming region.

The first message carries identification information of a virtual subscriber identity module (Subscriber Identity Module, SIM card) of the network operator in the roaming region.

The first message may be an over-the-air OTA message, that is, the OTA message carries the identification information of the virtual SIM card of the network operator in the roaming region. The identification information of the virtual SIM card may be in a link form, or may be in a code or menu form.

OTA (Over-The-Air) is a short message service-based mechanism, which implements dynamic download, deletion and update of a service menu in a SIM card by using a mobile terminal or a server (over a network), so that a user acquires a value-added data service (OTA service for short) of a personalized information service. The operator in the roaming region provides the virtual SIM card information to the roaming terminal by utilizing the OTA message.

S102: After succeeding in network authentication of the network operator in the roaming region, the terminal downloads virtual SIM card information according to the identification information of the virtual SIM card in the first message.

The terminal may succeed in network authentication of the network operator in the roaming region before S101 or after S101.

Specifically, the succeeding in network authentication of the network operator in the roaming region includes:
acquiring, by the terminal, a service number and a service password of the network operator in the roaming region.

A terminal user who has a roaming plan may acquire the service number and the service password from a website of the operator in the target roaming region according to a user demand, so that the terminal can, when arriving in the roaming region, acquire virtual SIM card information of the roaming region from a network of the operator in the roaming region and download the virtual SIM card information to the terminal.

When the terminal arrives in the roaming region, the terminal initiates a call to the service number, and obtains authentication information of the virtual SIM card by utilizing the service password, so as to succeed in the network authentication of the network operator in the roaming region.

Alternatively, the service number and the service password may be notified by the network operator in the roaming region to the roaming terminal user directly by using an OTA message (in an SMS message mode), or may be sent in the first message.

Optionally, the first message further carries service option information and a payment mode for the virtual SIM card that are provided by the network operator in the roaming region to the terminal. The service option information may include information such as different types of service options provided for the virtual SIM card, for selection and use of the user. In this case, the succeeding in network authentication of the network operator in the roaming region is specifically: selecting, by the terminal, service option information for the virtual SIM card according to the first message, and acquiring authentication information of the virtual SIM card by using the payment mode, so as to succeed in the network authentication of the network operator in the roaming region.

After succeeding in the network authentication of the network operator in the roaming region, the terminal downloads the virtual SIM card information according to the identification information of the virtual SIM card carried in the first message.

S103: The terminal uses, by utilizing the virtual SIM card, a service provided by the network operator in the roaming region to perform service transmission.

The service includes a network data service, a voice service, a short message service and/or a multimedia messaging service, and the like.

After the terminal user successfully downloads the virtual SIM card in S102, the user may choose, according to a demand, to use a service (a local card package in the roaming region) provided by the network operator in the roaming region, so as to reduce tariffs.

In this way, the roaming terminal may use the service (the local service package in the roaming region) provided by the network operator in the roaming region to perform communication, thereby implementing localization of the roaming terminal in the roaming region.

Optionally, after the downloading, by the terminal, the virtual SIM card information according to the first message, the method further includes:
storing, by the terminal, the virtual SIM card information.

Specifically, to ensure security of the card information, the terminal stores the virtual SIM card information separately according to a security level of the virtual SIM information. Generally, an operating system of the terminal user may include a secure operating system and an open operating system. To ensure security of the information, an authentication key and an authentication algorithm in the virtual SIM information are stored in the secure operating system, so as to ensure security of the key and an authentication computation process. The remaining of the virtual SIM information is stored in an encrypting file system (Encrypt File System, EFS), so as to facilitate acquisition by a modem.

Optionally, after the terminal stores the virtual SIM card information separately according to the security level of the virtual SIM information, the method further includes:
if the terminal is in a manual selection mode, receiving, by the terminal, conventional SIM card information or the virtual SIM card information, selected by the user, and performing configuration according to the conventional SIM card information or the virtual SIM card information selected by the user; or if the terminal is configured to be in an automatic selection mode, automatically configuring, by the terminal, a conventional SIM card or the virtual SIM card according to network access information.

FIG. 2 is a flowchart of another method for data service transmission provided in this embodiment. As shown in FIG. 2, the method includes:

S201: A server of a network operator in a roaming region sends a first message to a roaming terminal that enters the roaming region.

The first message carries identification information of a virtual SIM card of the network operator in the roaming region. The first message may be an OTA message, that is, the OTA message carries the identification information of the virtual SIM card of the network operator in the roaming region.

S202: The server receives a request, returned by the roaming terminal, for acquiring local virtual SIM card authentication information of the roaming region, determines whether to provide the virtual SIM card authentication information to the roaming terminal, and if yes, sends the virtual SIM card information to the roaming terminal when a request of the roaming terminal for downloading virtual SIM card information is received.

Optionally, before the network operator in the roaming region sends the first message to the roaming terminal that enters the roaming region, the method further includes:
receiving a service call request initiated by the roaming terminal, where the service call request carries a service number and a service password of the network operator in the roaming region.

The determining whether to provide the virtual SIM card authentication information to the roaming terminal specifically includes:
determining whether the service password is valid, and if yes, determining to provide the virtual SIM card authentication information to the roaming terminal.

Alternatively, the first message further carries service option information and a payment mode for the virtual SIM card that are provided by the network operator in the roaming region to the roaming terminal. The method further includes: receiving information about the virtual SIM card and a payment mode that are selected by the roaming terminal. The determining whether to provide the virtual SIM card authentication information to the roaming terminal is specifically:
determining whether the virtual SIM card and the payment mode that are selected by the roaming terminal are valid, and if yes, determining to provide the virtual SIM card authentication information to the roaming terminal.

The method for data service transmission provided in this embodiment of the present invention resolves a problem of data service use for a roaming terminal user and reduces tariffs for use of roaming data service, so that an operator in a roaming region can quickly attract roaming terminal users to use data service.

The foregoing is a detailed description of the method for data service transmission provided in the present invention. The following describes a terminal and a server provided in the present invention in detail.

### Embodiment 2

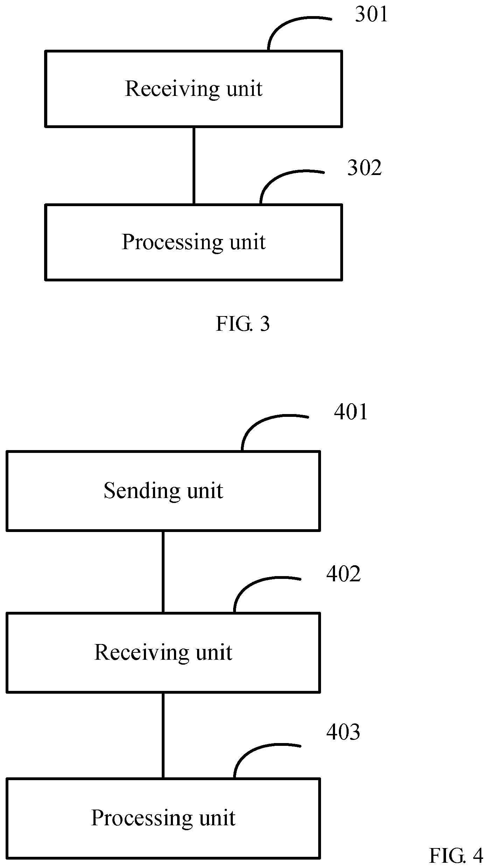

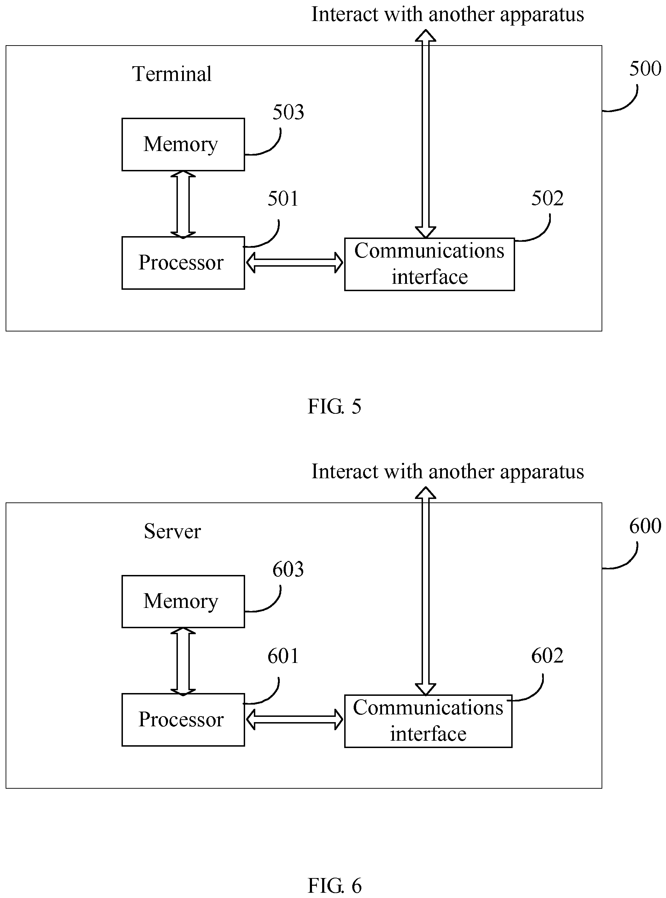

FIG. 3 is a schematic diagram of a terminal provided in this embodiment. As shown in FIG. 5, the terminal includes: a receiving unit 301 and a processing unit 302.

The receiving unit 301 is configured to: when the terminal arrives in a roaming region, receive a first message sent by a network operator in the roaming region.

The first message carries identification information of a virtual SIM card of the network operator in the roaming region. The first message may be an OTA message, that is, the OTA message carries the identification information of the virtual SIM card of the network operator in the roaming region.

The processing unit 302 is configured to: succeed in authentication of the network operator in the roaming region, download virtual SIM card information according to the identification information of the virtual SIM card in the first message received by the receiving unit 301, and use, by utilizing the virtual SIM card, a service provided by the network operator in the roaming region to perform service transmission.

The processing unit 302 may succeed in the network authentication of the network operator in the roaming region before or after the receiving unit 301 receives the first message.

Optionally, the terminal further includes an acquiring unit, configured to acquire a service number and a service password of the network operator in the roaming region.

A terminal user who has a roaming plan may acquire, according to the user's own need, by using the acquiring unit, the service number and the service password from a website of the operator in the target roaming region, so that the terminal can, when arriving in the roaming region, acquire virtual SIM card information of the roaming region from a network of the operator in the roaming region and download the virtual SIM card information to the terminal.

When the terminal arrives in the roaming region, the processing unit 302 initiates a call to the service number acquired by the acquiring unit, and obtains authentication information of the virtual SIM card by utilizing the service password, so as to succeed in the network authentication of the network operator in the roaming region.

Alternatively, the service number and the service password may be notified by the network operator in the roaming region to the roaming terminal user directly by using an OTA message (in an SMS message mode), or may be sent in the first message.

Optionally, the first message further carries service option information and a payment mode for the virtual SIM card that are provided by the network operator in the roaming region to the terminal. The processing unit 302 is configured to: acquire authentication information of the virtual SIM card, which specifically includes being configured to: select service option information for the virtual SIM card according to the first message, and acquire authentication information of the virtual SIM card by using the payment mode, so as to succeed in the network authentication of the network operator in the roaming region.

After succeeding in the network authentication of the network operator in the roaming region, the processing unit 302 downloads virtual SIM card information according to the identification information of the virtual SIM card carried in the first message, and performs data service transmission by using a service package in the roaming region for the virtual SIM card.

After the processing unit 302 successfully downloads the virtual SIM card, the user can select, according to a need, to use a local card service package in the roaming region, so as to reduce tariffs.

In this way, the terminal in roaming can use the local service package in the roaming region for communication, thereby implementing localization of the roaming terminal in the roaming region.

Optionally, the terminal further includes a storage unit, configured to store the virtual SIM card information after the processing unit downloads the virtual SIM card information according to the first message.

Specifically, the storage unit stores the virtual SIM card information separately according to a security level of the virtual SIM information: storing an authentication key and an authentication algorithm in the virtual SIM information in a secure operating system, so as to ensure security of the key and a process of authentication and calculation, and storing the remaining of the virtual SIM information in an encrypting file system EFS, so as to facilitate acquisition by a modem.

After the storage unit stores the virtual SIM card information separately according to the security level of the virtual SIM information, if the terminal is in a manual selection mode, the receiving unit 301 is further configured to receive conventional SIM card information or the virtual SIM card information, selected by a user, and the processing unit 302 is further configured to perform configuration according to the conventional SIM card information or the virtual SIM card information selected by the user; or, if the terminal is configured to be in an automatic selection mode, the processing unit 302 automatically configures a conventional SIM card or the virtual SIM card according to network access information.

FIG. 4 is a schematic diagram of a server provided in this embodiment. The server is a server belonging to a network operator in a roaming region. As shown in FIG. 4, the server includes: a sending unit 401, a receiving unit 402, and a processing unit 403.

The sending unit 401 is configured to send a first message to a roaming terminal that enters the roaming region.

The first message carries identification information of a virtual SIM card of the network operator in the roaming region. The first message may be an OTA message, that is, the OTA message carries the identification information of the virtual SIM card of the network operator in the roaming region.

The receiving unit 402 is configured to receive a request, returned by the roaming terminal, for acquiring local virtual SIM card authentication information of the roaming region.

The processing unit 403 is configured to: determine, according to a request received by the receiving unit 402, whether to provide the virtual SIM card authentication information to the roaming terminal, and if yes, send the virtual SIM card information to the roaming terminal by using the sending unit 401 when the receiving unit 402 receives a request of the roaming terminal for downloading virtual SIM card information.

Optionally, the receiving unit 402 is further configured to: before the sending unit 401 sends the first message to the roaming terminal that enters the roaming region, receive a service call request initiated by the roaming terminal, where the service call request carries a service number and a service password of the network operator in the roaming region. The processing unit 403 determines whether the service password received by the receiving unit 402 is valid, and if yes, determines to provide the virtual SIM card authentication information to the roaming terminal.

Alternatively, the first message sent by the sending unit 401 further carries service option information and a payment mode for the virtual SIM card that are provided by the network operator in the roaming region to the roaming terminal.

The receiving unit 402 receives information about the virtual SIM card and a payment mode that are selected by the roaming terminal.

The processing unit 403 determines whether the virtual SIM card and the payment mode received by the receiving unit 402 that are selected by the roaming terminal are valid, the selected payment mode, and if yes, determines to provide the virtual SIM card authentication information to the roaming terminal.

### Embodiment 3

FIG. 5 is a schematic diagram of composition of a terminal provided in this embodiment. As shown in FIG. 5, the terminal 500 includes: a processor 501, a communications interface 502, and a memory 503.

The communications interface 502 is configured to interact with another apparatus.

The memory 503 may be a permanent memory, for example, a hard disk drive or a flash drive. The memory 503 stores a software module and a device driver program. The software module can execute various functional modules of the foregoing method in the embodiments of the present invention; the device driver program may be a network and interface driver program.

Upon startup, these software components are loaded into the memory 503, and then are accessed by the processor 501 and execute the following instructions:
when arriving in a roaming region, receiving, by the terminal 500 by using the communications interface 502, a first message sent by a network operator in the roaming region, where the first message carries identification information of a virtual subscriber identity module SIM card of the network operator in the roaming region;
after succeeding in network authentication of the network operator in the roaming region, downloading, according to the identification information of the virtual SIM card in the first message, virtual SIM card information by using the communications interface 502; and
using, by utilizing the virtual SIM card and by using the communications interface 502, a service provided by the network operator in the roaming region to perform service transmission.

Specifically, the terminal 500 further executes, according to the instructions, the method for data service transmission in Embodiment 1, and details are not described repeatedly herein.

FIG. 6 is a schematic diagram of composition of a server provided in this embodiment. As shown in FIG. 5, the server 600 includes: a processor 601, a communications interface 602, and a memory 603.

The communications interface 602 is configured to interact with another apparatus.

The memory 603 may be a permanent memory, for example, a hard disk drive or a flash drive. The memory 603 stores a software module and a device driver program. The software module can execute various functional modules of the foregoing method in the embodiments of the present invention; the device driver program may be a network and interface driver program.

Upon startup, these software components are loaded into the memory 603, and then are accessed by the processor 601 and execute the following instructions:
sending, by using the communications interface 602, a first message to a roaming terminal that enters the roaming region, where the first message carries identification information of a virtual SIM card of the network operator in the roaming region;
receiving, by using the communications interface 602, a request, returned by the roaming terminal, for acquiring local virtual SIM card authentication information of the roaming region, determining whether to provide the virtual SIM card authentication information to the roaming terminal, and if yes, sending the virtual SIM card information to the roaming terminal by using the communications interface 602, when receiving, at the communications interface 602, a request of the roaming terminal for downloading virtual SIM card information.

Specifically, the server 600 further executes, according to the instructions, the method for data service transmission in Embodiment 1, and details are not described repeatedly herein.

The method for data service transmission and the terminal provided in the embodiments of the present invention can resolve a problem of data service use for a roaming terminal user and reduce tariffs for use of a roaming data service, so that an operator in a roaming region can quickly attract roaming terminal users to use the data service. This is fast and convenient and does not require card replacement.

A person skilled in the art may be further aware that, the units and algorithm steps in the examples described with reference to the embodiments disclosed in this specification may be implemented by electronic hardware, computer software, or a combination thereof. To clearly describe the interchangeability between hardware and software, the foregoing has generally described compositions and steps of the examples according to functions. Whether the functions are performed by hardware or software depends on particular applications and design constraint conditions of the technical solutions. A person skilled in the art may use a different method to implement the described functions for each particular application, but it should not be considered that the implementation goes beyond the scope of the present invention.

The steps of the methods or algorithms described in the embodiments disclosed in this specification may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk, a portable disk, a CD-ROM, or a storage medium in any other form well-known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the principle of the present invention should fall within the protection scope of the present invention.

## Claims

1. A method for data service transmission, wherein the method comprises:
when arriving in a roaming region, receiving (S101), by a terminal, a first message sent by a network operator in the roaming region, wherein the first message carries identification information of a virtual subscriber identity module, SIM, card of the network operator in the roaming region;
after succeeding in network authentication of the network operator in the roaming region, downloading (S102), by the terminal, virtual SIM card information according to the identification information of the virtual SIM card in the first message;
storing, by the terminal, the virtual SIM card information separately according to a security level of the virtual SIM information: storing an authentication key and an authentication algorithm in the virtual SIM information in a secure operating system, and storing the remaining of the virtual SIM information in an encrypting file system EFS;
after the storing, by the terminal, the virtual SIM card information separately according to a security level of the virtual SIM information, further comprising:
if the terminal is in a manual selection mode, receiving, by the terminal, the virtual SIM card information, selected by a user, and performing configuration according to the virtual SIM card information selected by the user; and
using (S103), by the terminal by utilizing the virtual SIM card, a service provided by the network operator in the roaming region to perform service transmission.

2. The method according to claim 1, wherein the first message is an over-the-air OTA message.

3. The method according to claim 1 or 2, wherein the succeeding in network authentication of the network operator in the roaming region specifically comprises:
acquiring, by the terminal, a service number and a service password of the network operator in the roaming region; and
when the terminal arrives in the roaming region, initiating, by the terminal, a call to the service number, and obtaining authentication information of the virtual SIM card by utilizing the service password, so as to succeed in the network authentication of the network operator in the roaming region.

4. The method according to claim 1 or 2, wherein the first message further carries service option information and a payment mode for the virtual SIM card that are provided by the network operator in the roaming region to the terminal; and
the succeeding in network authentication of the network operator in the roaming region specifically comprises:
selecting, by the terminal, service option information for the virtual SIM card according to the first message, and acquiring authentication information of the virtual SIM card by using the payment mode, so as to succeed in the network authentication of the network operator in the roaming region.

5. A method for data service transmission of a roaming terminal, wherein the method comprises:
sending (S201), by a server of a network operator in a roaming region, a first message to a roaming terminal that enters the roaming region, wherein the first message carries identification information of a virtual subscriber identity module, SIM, card of the network operator in the roaming region;
receiving (S202), by the server, a request, returned by the roaming terminal, for acquiring local virtual SIM card authentication information of the roaming region, determining whether to provide the virtual SIM card authentication information to the roaming terminal, and if yes, sending the virtual SIM card authentication information to the roaming terminal when a request of the roaming terminal for downloading virtual SIM card authentication information is received; and
storing, by the terminal, the virtual SIM card information separately according to a security level of the virtual SIM information: storing an authentication key and an authentication algorithm in the virtual SIM information in a secure operating system, and storing the remaining of the virtual SIM information in an encrypting file system EFS; and
after the storing, by the terminal, the virtual SIM card information separately according to a security level of the virtual SIM information, further comprising:
if the terminal is in a manual selection mode, receiving, by the terminal, the virtual SIM card information, selected by a user, and performing configuration according to the virtual SIM card information selected by the user;.

6. A terminal, wherein the terminal comprises:
a receiving unit (301), configured to: when the terminal arrives in a roaming region, receive a first message sent by a network operator in the roaming region, wherein the first message carries identification information of a virtual subscriber identity module, SIM, card of the network operator in the roaming region; and
a processing unit (302), configured to: succeed in authentication of the network operator in the roaming region, download virtual SIM card information according to the identification information of the virtual SIM card in the first message received by the receiving unit;
a storage unit, configured to store the virtual SIM card information separately according to a security level of the virtual SIM information: storing an authentication key and an authentication algorithm in the virtual SIM information in a secure operating system, and storing the remaining of the virtual SIM information in an encrypting file system EFS;
if the terminal is in a manual selection mode, and after the virtual SIM card information has been stored by the storage unit separately according to a security level of the virtual SIM information, the receiving unit is further configured to receive the virtual SIM card information, selected by a user, and the processing unit is further configured to perform configuration according to the virtual SIM card information selected by the user;
and use, by utilizing the virtual SIM card, a service provided by the network operator in the roaming region to perform service transmission.

7. The terminal according to claim 6, wherein the first message is an over-the-air OTA message.

8. The terminal according to claim 6 or 7, wherein the terminal further comprises:
an acquiring unit, configured to acquire a service number and a service password of the network operator in the roaming region; and
when the terminal arrives in the roaming region, the processing unit is specifically configured to: initiate a call to the service number acquired by the acquiring unit, and obtain authentication information of the virtual SIM card by utilizing the service password, so as to succeed in the network authentication of the network operator in the roaming region.

9. The terminal according to claim 6 or 7, wherein the first message further carries service option information and a payment mode for the virtual SIM card that are provided by the network operator in the roaming region to the terminal; and
the processing unit is configured to acquire authentication information of the virtual SIM card, which specifically comprises being configured to: select service option information for the virtual SIM card according to the first message, and acquire authentication information of the virtual SIM card by using the payment mode, so as to succeed in the network authentication of the network operator in the roaming region.

## Patentansprüche

1. Verfahren für Datendienstübertragung, wobei das Verfahren Folgendes umfasst:
bei Ankunft in einem Roamingbereich, Empfangen (S101), durch ein Endgerät, einer ersten Nachricht, gesendet von einem Netzbetreiber in dem Roamingbereich,
wobei die erste Nachricht Identifikationsinformationen einer virtuellen Teilnehmeridentitätsmodul (SIM)-Karte des Netzbetreibers in dem Roamingbereich enthält;
nach erfolgreicher Netzwerkauthentifizierung des Netzbetreibers in dem Roamingbereich, Herunterladen (S102), durch das Endgerät, von virtuellen SIM-Karten-Informationen gemäß den Identifikationsinformationen der virtuellen SIM-Karte in der ersten Nachricht;
getrenntes Speichern, durch das Endgerät, der virtuellen SIM-Karten-Informationen gemäß einer Sicherheitsstufe der virtuellen SIM-Informationen:
Speichern eines Authentifizierungsschlüssels und eines Authentifizierungsalgorithmus in den virtuellen SIM-Informationen in einem sicheren Betriebssystem, und
Speichern des Rests der virtuellen SIM-Informationen in einem Verschlüsselungsdateisystem (EFS);
nach dem getrennten Speichern, durch das Endgerät, der virtuellen SIM-Karten-Informationen gemäß einer Sicherheitsstufe der virtuellen SIM-Informationen, ferner Folgendes umfassend:
falls das Endgerät sich in einem manuellen Auswahlmodus befindet,
Empfangen, durch das Endgerät, der virtuellen SIM-Karten-Informationen, ausgewählt von einem Benutzer, und
Durchführen einer Konfiguration gemäß den von dem Benutzer ausgewählten virtuellen SIM-Karten-Informationen; und
Verwenden (S103), durch das Endgerät durch Nutzen der virtuellen SIM-Karte, eines von dem Netzbetreiber in dem Roamingbereich bereitgestellten Dienstes, um Dienstübertragung durchzuführen.

2. Verfahren gemäß Anspruch 1,
wobei die erste Nachricht eine Over-the-Air (OTA)-Nachricht (Funknachricht) ist.

3. Verfahren gemäß Anspruch 1 oder 2,
wobei die erfolgreiche Netzwerkauthentifizierung des Netzbetreibers in dem Roamingbereich speziell Folgendes umfasst:
Erfassen, durch das Endgerät, einer Servicenummer und eines Service-Kennworts des Netzbetreibers in dem Roamingbereich; und
wenn das Endgerät in dem Roamingbereich ankommt,
Initiieren, durch das Endgerät, eines Anrufs an die Servicenummer, und
Erhalten von Authentifizierungsinformationen der virtuellen SIM-Karte durch Nutzen des Service-Kennworts, um die Netzwerkauthentifizierung des Netzbetreibers in dem Roamingbereich erfolgreich durchzuführen.

4. Verfahren gemäß Anspruch 1 oder 2,
wobei die erste Nachricht ferner Service-Optionsinformationen und einen Bezahlungsmodus für die virtuelle SIM-Karte enthält, die von dem Netzbetreiber in dem Roamingbereich für das Endgerät bereitgestellt werden; und
die erfolgreiche Netzwerkauthentifizierung des Netzbetreibers in dem Roamingbereich speziell Folgendes umfasst:
Auswählen, durch das Endgerät, von Service-Optionsinformationen für die virtuelle SIM-Karte gemäß der ersten Nachricht, und
Erfassen von Authentifizierungsinformationen der virtuellen SIM-Karte durch Nutzen des Bezahlungsmodus, um die Netzwerkauthentifizierung des Netzbetreibers in dem Roamingbereich erfolgreich durchzuführen.

5. Verfahren für Datendienstübertragung eines roamenden Endgerätes,
wobei das Verfahren Folgendes umfasst:
Senden (S201), durch einen Server eines Netzbetreibers in einem Roamingbereich, einer ersten Nachricht an ein roamendes Endgerät, das in den Roamingbereich eintritt,
wobei die erste Nachricht Identifikationsinformationen einer virtuellen Teilnehmeridentitätsmodul (SIM)-Karte des Netzbetreibers in dem Roamingbereich enthält;
Empfangen (S202), durch den Server, einer Anfrage, zurückgegeben durch das roamende Endgerät, zum Erfassen von lokalen virtuellen SIM-Karten-Authentifizierungsinformationen des Roamingbereichs,
Bestimmen, ob die virtuellen SIM-Karten-Authentifizierungsinformationen dem roamenden Endgerät bereitzustellen sind, und wenn ja,
Senden der virtuellen SIM-Karten-Authentifizierungsinformationen zu dem roamenden Endgerät, wenn eine Anfrage des roamenden Endgerätes zum Herunterladen virtueller SIM-Karten-Authentifizierungsinformationen empfangen wird; und
getrenntes Speichern, durch das Endgerät, der virtuellen SIM-Karten-Informationen gemäß einer Sicherheitsstufe der virtuellen SIM-Informationen:
Speichern eines Authentifizierungsschlüssels und eines Authentifizierungsalgorithmus in den virtuellen SIM-Informationen in einem sicheren Betriebssystem, und
Speichern des Rests der virtuellen SIM-Informationen in einem Verschlüsselungsdateisystem (EFS); und
nach dem getrennten Speichern, durch das Endgerät, der virtuellen SIM-Karten-Informationen gemäß einer Sicherheitsstufe der virtuellen SIM-Informationen, ferner Folgendes umfassend:
falls das Endgerät sich in einem manuellen Auswahlmodus befindet, Empfangen, durch das Endgerät, der virtuellen SIM-Karten-Informationen, ausgewählt von einem Benutzer, und
Durchführen einer Konfiguration gemäß den von dem Benutzer ausgewählten virtuellen SIM-Karten-Informationen.

6. Endgerät, wobei das Endgerät Folgendes umfasst:
eine Empfangseinheit (301), die für Folgendes ausgelegt ist:
bei Ankunft des Endgerätes in einem Roamingbereich, Empfangen einer von einem Netzbetreiber in dem Roamingbereich gesendeten ersten Nachricht,
wobei die erste Nachricht Identifikationsinformationen einer virtuellen Teilnehmeridentitätsmodul (SIM)-Karte des Netzbetreibers in dem Roamingbereich enthält; und
eine Verarbeitungseinheit (302), die für Folgendes ausgelegt ist:
erfolgreiche Authentifizierung des Netzbetreibers in dem Roamingbereich,
Herunterladen von virtuellen SIM-Karten-Informationen gemäß den Identifikationsinformationen der virtuellen SIM-Karte in der von der Empfangseinheit empfangenen ersten Nachricht;
eine Speichereinheit, die dazu ausgelegt ist, die virtuellen SIM-Karten-Informationen gemäß einer Sicherheitsstufe der virtuellen SIM-Informationen getrennt zu speichern:
Speichern eines Authentifizierungsschlüssels und eines Authentifizierungsalgorithmus in den virtuellen SIM-Informationen in einem sicheren Betriebssystem, und
Speichern des Rests der virtuellen SIM-Informationen in einem Verschlüsselungsdateisystem (EFS);
falls das Endgerät sich in einem manuellen Auswahlmodus befindet, und nachdem die virtuellen SIM-Karten-Informationen von der Speichereinheit gemäß einer Sicherheitsstufe der virtuellen SIM-Karten-Informationen getrennt gespeichert worden sind, die Empfangseinheit ferner dazu ausgelegt ist, die von einem Benutzer ausgewählten virtuellen SIM-Karten-Informationen zu empfangen, und die Verarbeitungseinheit ferner dazu ausgelegt ist, eine Konfiguration gemäß den von dem Benutzer ausgewählten virtuellen SIM-Karten-Informationen durchzuführen; und
Verwenden, durch Nutzen der virtuellen SIM-Karte, eines von dem Netzbetreiber in dem Roamingbereich bereitgestellten Dienstes, um Dienstübertragung durchzuführen.

7. Endgerät gemäß Anspruch 6,
wobei die erste Nachricht eine Over-the-Air (OTA)-Nachricht (Funknachricht) ist.

8. Endgerät gemäß Anspruch 6 oder 7,
wobei das Endgerät ferner Folgendes umfasst:
eine Erfassungseinheit, die dazu ausgelegt ist, eine Servicenummer und ein Service-Kennwort des Netzbetreibers in dem Roamingbereich zu erfassen; und
wenn das Endgerät in dem Roamingbereich ankommt, die Verarbeitungseinheit insbesondere für Folgendes ausgelegt ist:
Initiieren eines Anrufs an die durch die Erfassungseinheit erfasste Servicenummer, und
Erhalten von Authentifizierungsinformationen der virtuellen SIM-Karte durch Nutzen des Service-Kennworts, um die Netzwerkauthentifizierung des Netzbetreibers in dem Roamingbereich erfolgreich durchzuführen.

9. Endgerät gemäß Anspruch 6 oder 7,
wobei die erste Nachricht ferner Service-Optionsinformationen und einen Bezahlungsmodus für die virtuelle SIM-Karte enthält, die von dem Netzbetreiber in dem Roamingbereich für das Endgerät bereitgestellt werden; und
die Verarbeitungseinheit dazu ausgelegt ist, Authentifizierungsinformationen der virtuellen SIM-Karte zu erfassen, was speziell umfasst, für Folgendes ausgelegt zu sein:
Auswählen von Service-Optionsinformationen für die virtuelle SIM-Karte gemäß der ersten Nachricht, und
Erfassen von Authentifizierungsinformationen der virtuellen SIM-Karte durch Nutzen des Bezahlungsmodus, um die Netzwerkauthentifizierung des Netzbetreibers in dem Roamingbereich erfolgreich durchzuführen.

## Revendications

1. Procédé destiné à une transmission de services de données, le procédé consistant à :
lors d'une arrivée dans une région d'itinérance, recevoir (S101), par un terminal, un premier message envoyé par un opérateur de réseau dans la région d'itinérance, le premier message acheminant des informations d'identification d'une carte de module d'identité d'abonné, SIM, virtuelle de l'opérateur de réseau dans la région d'itinérance ;
après une authentification de réseau réussie de l'opérateur de réseau dans la région d'itinérance, télécharger (S102), par le terminal, des informations de carte SIM virtuelle en fonction des informations d'identification de la carte SIM virtuelle dans le premier message ;
stocker, par le terminal, les informations de carte SIM virtuelle séparément en fonction d'un niveau de sécurité des informations SIM virtuelles : stocker une clé d'authentification et un algorithme d'authentification dans les informations SIM virtuelles dans un système d'exploitation sécurisé, et stocker le restant des informations SIM virtuelles dans un système de fichiers de chiffrement EFS ;
après le stockage, par le terminal, des informations de carte SIM virtuelle séparément en fonction d'un niveau de sécurité des informations SIM virtuelles, consistant en outre à :
si le terminal se trouve dans un mode de sélection manuelle, recevoir, par le terminal, les informations de carte SIM virtuelle, sélectionnées par un utilisateur, et effectuer une configuration en fonction des informations de carte SIM virtuelle sélectionnées par l'utilisateur ; et
utiliser (S103), par le terminal en utilisant la carte SIM virtuelle, un service fourni par l'opérateur de réseau dans la région d'itinérance pour effectuer une transmission de services.

2. Procédé selon la revendication 1, dans lequel le premier message est un message de type OTA (Over The Air).

3. Procédé selon la revendication 1 ou 2, dans lequel l'authentification de réseau réussie de l'opérateur de réseau dans la région d'itinérance consiste spécifiquement à :
acquérir, par le terminal, un numéro de service et un mot de passe de service de l'opérateur de réseau dans la région d'itinérance ; et
lorsque le terminal arrive dans la région d'itinérance, initier, par le terminal, un appel vers le numéro de service, et obtenir des informations d'authentification de la carte SIM virtuelle en utilisant le mot de passe de service, de façon à réussir l'authentification de réseau de l'opérateur de réseau dans la région d'itinérance.

4. Procédé selon la revendication 1 ou 2, dans lequel le premier message achemine en outre des informations d'options de services et un mode de paiement pour la carte SIM virtuelle qui sont prévus par l'opérateur de réseau dans la région d'itinérance vers le terminal ; et
la réussite de l'authentification de réseau de l'opérateur de réseau dans la région d'itinérance consiste spécifiquement à :
sélectionner, par le terminal, des informations d'options de services pour la carte SIM virtuelle en fonction du premier message, et acquérir des informations d'authentification de la carte SIM virtuelle en utilisant le mode de paiement, de façon à réussir l'authentification de réseau de l'opérateur de réseau dans la région d'itinérance.

5. Procédé destiné à une transmission de services de données d'un terminal d'itinérance, le procédé consistant à :
envoyer (S201), par un serveur d'un opérateur de réseau dans une région d'itinérance, un premier message à un terminal d'itinérance qui entre dans la région d'itinérance, le premier message acheminant des informations d'identification d'une carte de module d'identité d'abonné, SIM, virtuelle de l'opérateur de réseau dans la région d'itinérance ;
recevoir (S202), par le serveur, une requête, retournée par le terminal d'itinérance, pour acquérir des informations d'authentification de carte SIM virtuelle locale de la région d'itinérance, déterminer s'il faut fournir les informations d'authentification de carte SIM virtuelle au terminal d'itinérance, et si c'est le cas, envoyer les informations d'authentification de carte SIM virtuelle au terminal d'itinérance lorsqu'une requête est reçue du terminal d'itinérance pour télécharger les informations d'authentification de carte SIM virtuelle ; et
stocker, par le terminal, les informations de carte SIM virtuelle séparément en fonction d'un niveau de sécurité des informations SIM virtuelles : stocker une clé d'authentification et un algorithme d'authentification dans les informations SIM virtuelles dans un système d'exploitation sécurisé, et stocker le restant des informations SIM virtuelles dans un système de fichiers de chiffrement EFS ; et
après le stockage, par le terminal, des informations de carte SIM virtuelle séparément en fonction d'un niveau de sécurité des informations SIM virtuelles, consistant en outre à :
si le terminal se trouve dans un mode de sélection manuelle, recevoir, par le terminal, les informations de carte SIM virtuelle, sélectionnées par un utilisateur, et effectuer une configuration en fonction des informations de carte SIM virtuelle sélectionnées par l'utilisateur.

6. Terminal, le terminal comprenant :
une unité de réception (301), conçue pour : lorsque le terminal arrive dans une région d'itinérance, recevoir un premier message envoyé par un opérateur de réseau dans la région d'itinérance, le premier message acheminant des informations d'identification d'une carte de module d'identité d'abonné, SIM, virtuelle de l'opérateur de réseau dans la région d'itinérance ; et
une unité de traitement (302), conçue pour : réussir l'authentification de l'opérateur de réseau dans la région d'itinérance, télécharger des informations de carte SIM virtuelle en fonction des informations d'identification de la carte SIM virtuelle dans le premier message reçu par l'unité de réception ;
une unité de stockage, conçue pour stocker les informations de carte SIM virtuelle séparément en fonction d'un niveau de sécurité des informations SIM virtuelles : le stockage d'un clé d'authentification et d'un algorithme d'authentification dans les informations SIM virtuelles dans un système d'exploitation sécurisé, et le stockage du restant des informations SIM virtuelles dans un système de fichiers de chiffrement EFS ;
si le terminal se trouve dans un mode de sélection manuelle, et après que les informations de carte SIM virtuelle ont été stockées par l'unité de stockage séparément en fonction d'un niveau de sécurité des informations SIM virtuelles, l'unité de réception est conçue en outre pour recevoir les informations de carte SIM virtuelle, sélectionnées par un utilisateur, et l'unité de traitement est conçue en outre pour effectuer une configuration en fonction des informations de carte SIM virtuelle sélectionnées par l'utilisateur ;
et utiliser, en utilisant la carte SIM virtuelle, un service prévu par l'opérateur de réseau dans la région d'itinérance pour effectuer une transmission de services.

7. Terminal selon la revendication 6, dans lequel le premier message est un message de type OTA (Over The Air).

8. Terminal selon la revendication 6 ou 7, le terminal comprenant en outre :
une unité d'acquisition, conçue pour acquérir un numéro de service et un mot de passe de service de l'opérateur de réseau dans la région d'itinérance ; et
lorsque le terminal arrive dans la région d'itinérance, l'unité de traitement est conçue spécifiquement pour : initier un appel vers le numéro de service acquis par l'unité d'acquisition, et obtenir des informations d'authentification de la carte SIM virtuelle en utilisant le mot de passe de service, de façon à réussir l'authentification de réseau de l'opérateur de réseau dans la région d'itinérance.

9. Terminal selon la revendication 6 ou 7, dans lequel le premier message achemine en outre des informations d'options de services et un mode de paiement pour la carte SIM virtuelle qui sont prévus par l'opérateur de réseau dans la région d'itinérance vers le terminal ; et
l'unité de traitement est conçue pour acquérir des informations d'authentification de la carte SIM virtuelle, qui consiste spécifiquement à être conçue pour : sélectionner des informations d'options de services pour la carte SIM virtuelle en fonction du premier message, et acquérir des informations d'authentification de la carte SIM virtuelle en utilisant le mode de paiement, de façon à réussir l'authentification de réseau de l'opérateur de réseau dans la région d'itinérance.
